# EUROPEAN PATENT SPECIFICATION

(11) **EP 2 914 450 B1**
(45) Date of publication and mention of the grant of the patent: **26.07.2017**
(21) Application number: 13821970.4
(22) Date of filing: 24.10.2013
(51) Int. Cl.: B60C 15/06, B60C 1/00

(54) **TIRE FOR VEHICLE WHEELS**
REIFEN FÜR FAHRZEUGRÄDER
PNEU POUR ROUES DE VÉHICULE

(30) Priority: 31.10.2012 IT MI20121859; 29.01.2013 US 201361757771 P
(43) Date of publication of application: 09.09.2015
(73) Proprietor: Pirelli Tyre S.p.A., 20126 Milano (IT)
(72) Inventor: GIANNINI, Luca, I-20126 Milano (IT); LOSTRITTO, Angela, Breuberg (DE)
(74) Representative: Allaix, Roberto
(86) International application number: PCT/IB2013/059596
(87) International publication number: WO 2014/068451

(56) References cited:
- EP-A1- 2 179 865
- EP-A2- 1 193 085
- US-A1- 2006 173 115

## Description

### FIELD OF THE INVENTION

The present invention relates to a tire for vehicle wheels.

In particular, the invention relates to a high-performance tire for wheels of two- or four-wheeled vehicles for applications requiring high running speeds and/or extreme driving conditions, and typically, but not exclusively, tires capable of withstanding maximum speeds of at least about 210 km/h, or of supporting maximum loads of at least about 210 kg, or a combination of both of these. The invention also relates to a tire for wheels of heavy transport vehicles. The invention also relates to a method for improving the performance of a tire for vehicle wheels.

### PRIOR ART

Tires for vehicle wheels are described in patent applications EP1193085A2, EP1310385, EP1535762, EP2179865, US2006/173115, FR2670160A1 and JP59126442A, and in patent application WO2006010479A1 in the name of the present Applicant.

### SUMMARY OF THE INVENTION

High-performance tires for vehicle wheels or tires for heavy transport vehicle wheels may be subjected, in various manoeuvres, to considerable circumferential, transverse and combined stresses.

These stresses are transmitted from the wheel rim to the tire, and vice versa, through the bead structures of the tire, causing deformations which may lead to the initiation and propagation of cracks and ruptures in the bead filler of the bead structure itself.

High-performance (HP) and ultra-high-performance (UHP) tires for cars and for motorcycles, as well as tires for heavy transport vehicles, are typically provided with stiff bead structures so as to counteract the considerable lateral thrust which occurs, for example, during turns made at high speed or in extreme driving conditions, for example when travelling at the limits of adhesion or in case of manoeuvres performed while carrying heavy loads, respectively.

The present Applicant considered that the bead filler formed a transition member of the bead structure between the annular anchoring members which have a high stiffness typical of a metallic material (such as steel) and the sidewall of the tire, which has a much lower stiffness.

Because of its position and its function, the bead filler typically comprises a mixture having values of stiffness such that it can provide the aforesaid transition function in an effective manner.

On the basis of these observations, the present Applicant hypothesized that further improvements in the structural and functional characteristics of a tire at high speed and/or in extreme driving conditions and/or under a heavy load, to meet the increasingly stringent requirements of the market, could be achieved by means of a further increase in the stiffness of the bead filler.

The present Applicant observed that creating stiffness by increasing the amount of thermosetting resins added to the mixture could not provide a solution to the problem, owing to the difficulty of processing the bead filler both during the preparation of the mixture and during the building of the tire. The present Applicant also hypothesized that an excessive presence of resins could lead to excessive thermoplasticity of the tire component, the latter indicating a substantial variation of the elastic dynamic modulus with a variation in temperature.

The present Applicant, therefore, initially tested the possibility of increasing the percentage of sulphur or carbon black in the elastomeric material of the bead filler. Although these solutions did indeed result in greater stiffness, they had a negative side effect in the form of increased brittleness of the resulting elastomeric material, and also, in the case of an increase in the amount of carbon black, a considerable increase in viscosity, thus making the mixture less workable.

The present Applicant therefore focused his attention on these results, and attempted to achieve greater stiffness in the elastomeric material of the bead filler without any adverse effects on the other characteristics of structure and/or workability.

The present Applicant found that it was possible to obtain tires having improved performance in extreme conditions of use, particularly as regards stability and controllability, by making the bead filler from an elastomeric material comprising inorganic fibres of nanometric dimensions, preferably inorganic fibres composed of magnesium and/or aluminium silicates.

The present Applicant found that the addition of the inorganic fibres of nanometric dimensions to the elastomeric material, from which the bead filler was made, resulted in increased stiffness of the bead filler without the appearance of problems of greater brittleness and lower workability.

This is surprising in that the present Applicant had noted that the elastomeric material reinforced with the aforesaid inorganic fibres of magnesium and/or aluminium silicates of nanometric dimensions showed a marked reduction in the dynamic shear modulus as the dynamic deformation increased, in other words a large Payne effect, such that the material could be considered unsuitable for use in high-performance tires.

Since a large Payne effect typically leads to a loss of reinforcement with increased deformation, a reduction of the tire performance was to be expected.

In spite of this, the present Applicant conducted tests on tires having a bead filler made of an elastomeric material reinforced with the aforesaid fibres, and, surprisingly, was able to find excellent performance in terms of stability and controllability, and in addition without embrittlement of the tire in the bead areas.

According to a first aspect, therefore, the present invention relates to a method for increasing the performance of a tire for vehicle wheels during manoeuvres performed at high speed and/or under heavy loads, said method comprising:
to realize a tire equipped with a pair of bead structures each comprising at least one bead filler having predetermined stiffness and including a crosslinked elastomeric material obtained by crosslinking a crosslinkable elastomeric composition;
wherein the stiffness of the bead filler in the finished tire is determined by adjusting, within said crosslinkable elastomeric composition, the presence and the amount of one or more ingredients selected from elastomeric polymers, vulcanizing agents, accelerators, thermosetting resins, carbon black and magnesium and/or aluminium silicate inorganic fibres having nanometric dimensions.

In a second aspect, the present invention relates to a tire for vehicle wheels, comprising:
- a carcass structure comprising at least one carcass layer having opposed side edges associated with relative annular reinforcing structures,
- a tread band applied in a radially outer position with respect to said carcass structure, and
- a pair of sidewalls laterally applied onto opposite sides with respect to said carcass structure;
wherein said annular reinforcing structures comprise a crosslinked elastomeric material obtained by crosslinking of a crosslinkable elastomeric composition comprising magnesium and/or aluminium silicate inorganic fibres having nanometric dimensions, wherein said crosslinked elastomeric material has an elastic dynamic modulus E', at 70°C and a frequency of 10 Hz, higher than about 55 MPa.

Preferably, said crosslinked elastomeric material has an elastic dynamic modulus E', at 70°C and a frequency of 10 Hz, higher than 60 MPa.

Preferably, said crosslinked elastomeric material has an elastic dynamic modulus E', at 23°C and a frequency of 10 Hz, higher than 65 MPa, or more preferably higher than 70 MPa.

Preferably, said crosslinked elastomeric material has an elongation at break value higher than 115%, or preferably higher than 120%.

Typically, the tire according to the present invention comprises a belt structure applied in a radially outer position with respect to the carcass structure.

In the present description, the term "fibre" indicates an elongate member having one dimension (length) much greater than the cross-sectional diameter, and the expression "nanometric dimensions" relating to inorganic fibres indicates that the inorganic fibres have a diameter of less than 500 nm.

The term "phr", as known in the art, signifies the parts by weight of a specific component of the elastomeric material per 100 parts by weight of elastomeric polymer.

In a preferred embodiment, said crosslinked elastomeric material is obtained by crosslinking a crosslinkable elastomeric composition comprising (a) a diene elastomeric polymer and (b) magnesium and/or aluminium silicate inorganic fibres having a diameter of less than 100 nm.

In a preferred embodiment, said crosslinkable elastomeric composition comprises an amount of inorganic fibres greater than about 5 phr, preferably greater than about 8 phr. Preferably, the amount of inorganic fibres is less than about 25 phr, preferably less than about 22 phr. Advantageously, the amount of inorganic fibres is of from about 10 phr to about 20 phr.

In a preferred embodiment, said elastomeric composition further comprises (c) a carbon black reinforcing filler.

In a preferred embodiment, the carbon black reinforcing filler is present in the elastomeric composition in an amount greater than about 30 phr, preferably greater than about 40 phr.

Preferably, the carbon black reinforcing filler is present in an amount of less than about 100 phr, preferably less than about 90 phr.

Advantageously, the carbon black reinforcing filler is of from about 50 phr to about 80 phr.

Advantageously, said elastomeric composition further comprises (d') at least one methylene donor compound and (d") at least one methylene acceptor compound.

Advantageously, the crosslinkable elastomeric composition preferably comprises an amount of methylene donor compound greater than about 1 phr, preferably greater than about 3 phr.

Preferably, the amount of methylene donor compound is less than about 15 phr, preferably less than about 10 phr. Advantageously, the amount of methylene donor compound is of from about 4 phr to about 8 phr.

Advantageously, the crosslinkable elastomeric composition preferably comprises an amount of methylene acceptor compound greater than about 5 phr, preferably greater than about 8 phr. Preferably, the amount of methylene acceptor compound is less than about 25 phr. Advantageously, the amount of methylene acceptor compound is of from about 10 phr to about 20 phr.

Advantageously, said crosslinkable elastomeric composition comprises (e) a vulcanizing agent.

In a preferred embodiment, said crosslinkable elastomeric composition comprises an amount of vulcanizing agent greater than about 3.5 phr, preferably greater than about 4 phr.

Preferably, the amount of vulcanizing agent is less than or equal to about 7.5 phr, preferably less than or equal to about 7 phr. Advantageously, the amount of sulphur is of from about 4.5 phr to about 6.5 phr.

In a preferred embodiment, the diene elastomeric polymer (a) that can be used in the present invention may be chosen from those commonly used in sulphur crosslinkable elastomeric materials, which are particularly suitable for tire production, that is to say from elastomeric polymers or copolymers with an unsaturated chain having a glass transition temperature (Tg) generally below 20°C, and preferably within the range from 0°C to -110°C. These polymers or copolymers may be of natural origin or may be produced by solution polymerization, emulsion polymerization or gas-phase polymerization of one or more conjugate diolefins, optionally mixed with at least one comonomer chosen from among monovinylarenes and/or polar comonomer.

Conjugate diolefins generally contain from 4 to 12, preferably from 4 to 8, carbon atoms and may be chosen, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Monovinylarenes, which can be optionally used as co-monomers, generally contain from 8 to 20, preferably from 8 to 12, carbon atoms and may be chosen, for example, from among: styrene; 1-vinylnaphthalene; 2-vinylnaphthalene; various alkyl, cycloalkyl, aryl, alkyl-aryl or aryl-alkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may be optionally used may be chosen, for example, from among: vinylpyridine, vinylquinoline, esters of acrylic acid and alkyl acrylic acid, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which can be used in the present invention may be chosen, for example, from among: cis-1,4-polyisoprene (natural or synthetic, preferably natural rubber), 3,4-polyisoprene, polybutadiene (particularly polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

In a preferred embodiment, said elastomeric composition comprises at least 10% by weight, preferably from 20% to 100% by weight, with respect to the total weight of said at least one diene elastomeric polymer (a), of natural rubber.

The aforesaid elastomeric composition may optionally comprise at least one elastomeric polymer of one or more monoolefins with an olefin comonomer or derivatives thereof (a'). The monoolefins may be chosen from among: ethylene and α-olefins generally containing from 3 to 12 carbon atoms, such as, for example, propylene, 1-butene, 1-pentene, 1-hexene, 1-octene or mixtures thereof. The following are preferred: copolymers of ethylene and an α-olefin, optionally with a diene; homopolymers of isobutene or their copolymers with small quantities of a diene, which are optionally at least partially halogenated. Any diene that is present generally contains from 4 to 20 carbon atoms and is preferably chosen from among: 1,3-butadiene, isoprene, 1,4-hexadiene, 1,4-cyclohexadiene, 5-ethylidene-2-norbornene, 5-methylene-2-norbornene, vinyl norbornene or mixtures thereof. Of these, the following are particularly preferred: ethylene/propylene (EPR) or ethylene/propylene/diene (EPDM) copolymers; polyisobutene; butyl rubbers; halobutyl rubbers, particularly chlorobutyl or bromobutyl rubbers; or mixtures thereof.

It is also possible to use a diene elastomeric polymer (a) or an elastomeric polymer (a') functionalized by reaction with suitable terminating agents or coupling agents. In particular, the diene elastomeric polymers obtained by anionic polymerization in the presence of an organometallic initiator (particularly an organolithium initiator) may be functionalized by causing the residual organometallic groups derived from the initiator to react with suitable terminating agents or coupling agents such as, for example, imines, carbodiimides, tin alkyl halides, substituted benzophenones, alkoxysilanes or aryloxysilanes.

As described above, said elastomeric composition preferably comprises inorganic fibres (b) preferably having a diameter of less than 100 nm.

Advantageously, said inorganic fibres have a diameter of from 1 to 100 nm, more preferably of from about 5 to about 50 nm.

Preferably, said inorganic fibres have a length of less than about 10 µm, more preferably of from about 0.2 to about 10 µm, even more preferably of from about 0.2 to about 5 µm.

Advantageously, the inorganic fibres used in the present invention are selected from the group consisting of magnesium and/or aluminium silicate fibres, for example sepiolite fibres, palygorskite fibres (also known as attapulgite), or mixtures thereof. Inorganic fibres of sepiolite are particularly preferred.

Advantageously, the inorganic fibres are treated with a compatibilizer.

In a preferred embodiment, said compatibilizer may be chosen, for example, from quaternary ammonium or phosphonium salts having the general formula (I): 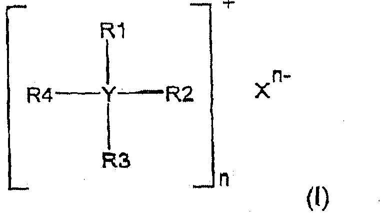 in which:
Y represents N or P;
R1, R2, R3 and R4, which may be identical or different each other, represent a linear or branched C1-C20 alkyl or hydroxyalkyl group; a linear or branched C1-C20 alkenyl or hydroxyalkenyl group; a -R5-SH or -R5-NH₂ group, in which R5 represents a linear or branched C1-C20 alkenyl group; a C6-C18 aryl group; a C7-C20 aryl-alkyl or alkyl-aryl group; a C5-C18 cycloalkyl group, said cycloalkyl group optionally containing heteroatoms such as oxygen, nitrogen or sulphur;
Xⁿ⁻ represents an anion such as the chlorine ion, the sulphate ion or the phosphate ion; and
n represents 1, 2 or 3.

The inorganic fibres are treated with the compatibilizer in order to obtain a high dispersion of the silicates in the elastomeric matrix. The silicate, which is typically hydrophilic, is made organophilic by the exchange of alkaline cations, for example with relatively long chains of quaternary alkyl ammonium cations, thereby modifying the surface polarity of the silicate. Further details are given, for example, in the patents US 4,136,103, US 5,747,560 or US 5,952,093. An example of inorganic fibres, which may be used according to the present invention and which is available on the market, is the product known under the name of Pangel B5, supplied by the Tolsa Group (http://www.tolsa.com/).

As described above, said elastomeric composition preferably also comprises at least one carbon black reinforcing filler (c).

In a preferred embodiment, the carbon black reinforcing filler (c) that can be used in the present invention may be chosen from among those having a surface area of at least 20 m²/g (as found from the STSA - statistical thickness surface area - according to ISO 18852:2005).

At least one additional reinforcing filler may advantageously be added to the aforesaid elastomeric composition, in an amount generally of from 1 phr to 70 phr, preferably from about 10 phr to about 60 phr. The reinforcing filler may be chosen from those commonly used for crosslinked products, in particular for tires, such as for example silica, alumina, aluminosilicates, calcium carbonate, kaolin, or mixtures thereof.

The silica that can be used in the present invention may generally be a pyrogenic silica or, preferably, a precipitated silica, with a BET surface area (measured according to the ISO 5794/1 standard) of from about 50 m²/g to about 500 m²/g, preferably from about 70 m²/g to about 200 m²/g.

As described above, said elastomeric composition preferably also comprises (d') at least one methylene donor compound and (d") at least one methylene acceptor compound.

In a preferred embodiment, the methylene donor compound (d') may be chosen, for example, from among: hexamethylenetetramine (HMT); hexamethoxymethylmelamine (HMMM); formaldehyde; paraformaldehyde; trioxane; 2-methyl-2-nitro-1-propanal; substituted melamine resins, such as N-substituted oxymethylmelamine resins; glycoluril compounds such as tetramethoxy methyl glycoluril; urea-formaldehyde resins such as butylated urea-formaldehyde resins; or mixtures thereof. Hexamethylenetetramine (HMT) or hexamethoxymethylmelamine (HMMM) are particularly preferred.

In a preferred embodiment, the methylene acceptor compound (d") may be chosen, for example, from: resorcinol; catechol; hydroquinone; pyrogallol; phloroglucinol; 1-naphthol; 2-naphthol; phenolic resins obtained by condensation of a phenol, optionally substituted with an aldehyde, such as, for example, formaldehyde, acetaldehyde, furfurol (for example resorcinol-formaldehyde resin); or mixtures thereof. Solid phenolic resins of the novolac type are particularly preferred.

Said methylene donor compound (d') and said methylene acceptor compound (d") may also be added to the crosslinkable elastomeric composition in precondensed form (that is to say, condensed before being added to said crosslinkable elastomeric composition) such as resorcinol-formaldehyde resin, substituted melamine resins such as N-substituted oxymethylmelamine resins, or mixtures thereof. Said precondensed resins are capable of self-crosslinking because they contain various reactive groups.

As described above, said elastomeric composition preferably comprises (e) at least one vulcanizing agent.

The crosslinkable elastomeric composition can be vulcanized by known methods, particularly by means of sulphur-based vulcanization systems commonly used for diene elastomeric polymers. For this purpose, a sulphur-based vulcanizing agent is incorporated into the materials, together with vulcanization accelerators, after one or more stages of thermomechanical treatment. In the final treatment step, the temperature is generally kept below 120°C, and preferably below 100°C, so as to prevent any undesired crosslinking phenomenon.

Preferably, said vulcanizing agent comprises sulphur-based vulcanization systems comprising sulphur or sulphur-containing molecules (sulphur donors) together with vulcanization accelerators and/or activators known in the art.

Activators which are particularly effective are zinc compounds, and particularly ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, as well as BiO, PbO, Pb₃O₄, PbO₂ or mixtures thereof.

The accelerators which are commonly used may be chosen from: dithiocarbamates, guanidine, thiourea, thiazoles, sulphenamides, thiurams, amines, xanthates, or mixtures thereof.

In a preferred embodiment, said elastomeric composition further comprises a silane coupling agent capable of interacting with the silica that may be present as a reinforcing filler and/or with the silicates and of binding them to the diene elastomeric polymer during vulcanization.

In a preferred embodiment, the silane coupling agent that can be used in the present invention may be chosen from those having at least one hydrolysable silane group, which may be identified, for example, by the following general formula (II):

(R)₃Si-CₙH₂ₙ₋X (II)

where the R groups, which may be identical or different, are chosen from: alkyl, alkoxy or aryloxy groups or halogen atoms, provided that at least one of the R groups is an alkoxy or aryloxy group; n is an integer from 1 to 6 inclusive; X is a group chosen from nitroso, mercapto, amino, epoxide, vinyl, imide, chlorine, -(S)ₘCₙH₂ₙ-Si-(R)₃ and -S-COR, where m and n are integers from 1 to 6 inclusive and the R groups are defined as above.

The silane coupling agents that are particularly preferred are bis(3-triethoxysilylpropyl) tetrasulphide and bis(3-triethoxysilylpropyl) disulphide. Said coupling agents may be used as they are or as a suitable mixture with an inert filler (for example carbon black) so as to facilitate their incorporation into the elastomeric composition.

In a preferred embodiment, said silane coupling agent is present in the elastomeric composition in an amount of from 0.01 phr to about 10 phr, preferably from about 0.5 phr to about 5 phr.

Said elastomeric composition may comprise other commonly used additives, chosen on the basis of the specific application for which the composition is intended. For example, the following may be added to said materials: antioxidants, anti-ageing agents, plasticizers, adhesives, anti-ozone agents, modifying resins, or mixtures thereof.

In particular, in order to improve workability, a plasticizer, generally chosen from among mineral oils, vegetable oils, synthetic oils or mixtures thereof, such as, for example, aromatic oil, naphthenic oil, phthalates, soya oil, or mixtures thereof, may be added to said elastomeric composition. The amount of plasticizer is generally of from 0 phr to about 70 phr, more preferably from about 5 phr to about 30 phr.

The elastomeric composition may be prepared by mixing the polymeric components together with the reinforcing filler and any other additives that may be present according to methods known in the art. The mixing may be carried out, for example, by means of an open mixer of the "open mill" type or an internal mixer of the type having tangential rotors (Banbury®) or interlocking rotors (Intermix™), or in continuous mixers of the Ko-Kneader™ type, or of the twin screw or multiscrew type.

This description is set out below with reference to the appended drawings, which are provided for guidance only and which are therefore non-limiting, in which:
- Figure 1 shows a tire for vehicle wheels in radial half-section; and
- Figure 2 shows schematically a radial section through a tire for motorcycles.

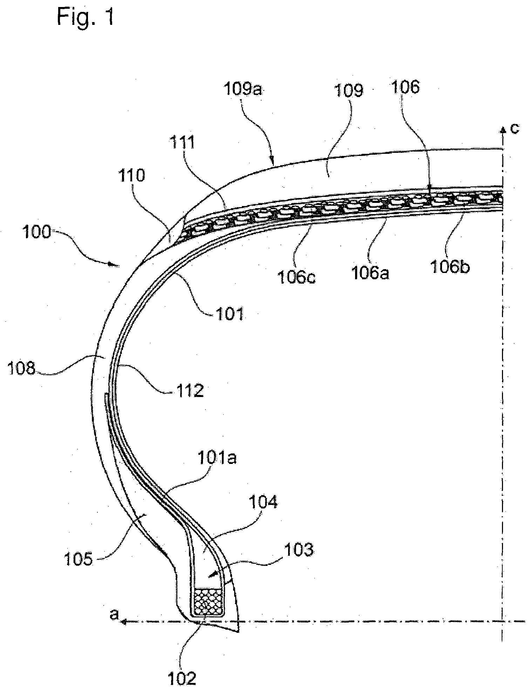

In Figure 1, "a" indicates an axial direction and "r" indicates a radial direction. For simplicity, Figure 1 shows only a portion of the tire, the remainder that is not shown being identical and being positioned symmetrically with respect to the radial direction "r".

The tire 100 for four-wheeled vehicles comprises at least one carcass structure, comprising at least one carcass layer 101 having respectively opposite terminal hedges engaging with respective annular anchoring structures 102 called bead wires, optionally associated with a bead filler 104. The area of the tire including the bead wire 102 and the filler 104 forms an annular reinforcing structure 103, the so-called bead, intended to anchor the tire on a corresponding mounting rim (not shown). The annular reinforcing structure 103, and in particular the bead filler 104, is made from elastomeric material comprising inorganic fibres of magnesium and/or aluminium silicate of nanometric dimensions.

The carcass structure is usually of the radial type, in other words, the reinforcing members of the at least one carcass layer 101 are located on planes which include the axis of rotation of the tire and which are substantially perpendicular to the equatorial plane of the tire. Said reinforcing members are generally composed of textile cords, made for example of rayon, nylon, or polyester (for example, polyethylene naphthalate (PEN)). Each annular reinforcing structure is associated with the carcass structure by turning up the opposed lateral edges of the at least one carcass layer 101 around the annular anchoring structure 102 so as to form the so-called carcass turn-ups 101a as shown in Figure 1.

In one embodiment, the coupling between the carcass structure and the annular reinforcing structure may be provided by means of a second carcass layer (not shown in Figure 1) applied in an axially outer position with respect to the first carcass layer.

An anti-abrasion strip 105 is placed in an outer position on each annular reinforcing structure 103. Preferably, each anti-abrasion strip 105 is placed at least in an axially outer position relative to the annular reinforcing structure 103, extending at least between the sidewall 108 and the portion radially below the annular reinforcing structure 103.

Preferably, the anti-abrasion strip 105 is placed so as to wrap around the annular reinforcing structure 103 along the axially inner and outer and radially lower areas of the annular reinforcing structure 103 so as to be interposed between the latter and the wheel rim when the tire 100 is mounted on the rim.

The carcass structure is associated with a belt structure 106 comprising one or more belt layers 106a, 106b radially superimposed on one another and with respect to the carcass layer, having reinforcing cords typically metallic. These reinforcing cords may have crosswise orientation with respect to a circumferential direction of extension of the tire 100. The term "circumferential" direction denotes a direction generally turned in the direction of rotation of the tire.

In a radially outer position with respect to the belt layers 106a,106b there may be applied at least one reinforcing layer at zero degrees 106c, commonly known as a "0° belt", which generally incorporates a plurality of reinforcing cords, typically textile cords, orientated in a substantially circumferential direction, thus forming an angle of a few degrees (for example, an angle from about 0° to 6°) with respect to the equatorial plane of the tire, and being covered with an elastomeric material.

In a radially outer position with respect to the belt structure 106 there is applied a tread band 109 made of an elastomeric mixture, as are the other semi-finished products making up the tire 100.

Corresponding sidewalls 108 of elastomeric mixture are also applied in an axially outer position on the lateral surfaces of the carcass structure, each of which surfaces extending from one of the lateral edges of the tread 109 up to the corresponding annular reinforcing structure 103.

In a radially outer position, the tread band 109 has a running surface 109a intended to come into contact with the ground. Circumferential grooves, connected by transverse notches (not shown in Figure 1) so as to define a plurality of blocks of various shapes and sizes distributed over the running surface 109a, are generally formed in this surface 109a, which for simplicity is shown as being smooth in Figure 1.

An under-layer 111 is placed between the belt structure 106 and the tread band 109.

A strip made of elastomeric material 110, commonly known as a "mini-sidewall", may optionally be present in the area of connection between the sidewalls 108 and the tread band 109, this mini-sidewall generally being produced by co-extrusion with the tread band 109 and enabling the mechanical interaction between the tread band 109 and the sidewalls 108 to be improved. Preferably, the terminal portion of the sidewall 108 directly covers the lateral edge of the tread band 109.

In the case of tubeless tires, a rubber layer 112, generally known as a "liner", which provides the necessary impermeability of the tire to the inflation air, may also be provided in a radially inner position with respect to the carcass layer 101.

In an embodiment which is not shown, the tire may be a tire for wheels of heavy transport vehicles, such as trucks, buses, trailers, vans, and more generally for vehicles in which the tire is subject to a heavy load.

Preferably, a tire of this kind is adapted to be mounted on rims having a diameter equal to or higher than 17.5 inches for steerable wheels or trailer wheels. A heavy transport vehicle is, for example, a vehicle in one of categories M2, M3, N2, N3, 02, 03 and 04 according to "ECE Consolidated Resolution of the Construction of Vehicles (R.E. 3), Annex 7, Classification and definition of power driven vehicles and trailers", or one of the categories M3, N2, N3, 03, 04 according to "ETRTO Engineering design information" (2010 ed.), "General Information" section, pp. G15 and G16, chapter headed "International codes for wheeled vehicle classification as UN/ECE 29/78 and Directive 2003/37". The category of heavy transport vehicles includes trucks, tractor-trailers, lorries, buses, and similar vehicles.

The tire for wheels of heavy transport vehicles comprises at least one carcass ply, the opposed lateral edges of which are associated with respective annular reinforcing structures, the so-called bead, comprising an annular anchoring structure, called a bead wire, and at least one bead filler. The annular reinforcing structures, and in particular the bead filler, are made from elastomeric material comprising inorganic fibres of magnesium and/or aluminium silicates of nanometric dimensions. The association between said at least one carcass ply and said annular reinforcing structure is typically obtained by turning up the opposed lateral edges of said at least one carcass ply around said annular anchoring structure and around said at least one bead filler so as to form a carcass turn-up.

An anti-abrasion strip is placed in an outer position with respect to each annular reinforcing structure.

Said at least one carcass ply generally comprises a plurality of carcass ply reinforcing members positioned substantially parallel to each other and at least partially covered with a layer of elastomeric material. These carcass ply reinforcing members, particularly in the case of truck tires, usually comprise metal cords, preferably made of steel.

Said at least one carcass ply is usually of the radial type, in other words it incorporates reinforcing members positioned in a direction substantially perpendicular to the circumferential direction.

A belt structure is applied in a radially outer position with respect to said at least one carcass ply.

The belt structure comprises at least two load-bearing belt layers, radially superimposed and incorporating a plurality of belt reinforcing members, typically metal cords, preferably made of steel. The belt structure may also comprise a zero degrees reinforcing layer applied, for example, in a radially outer position with respect to the second load-bearing belt layer.

The metal cords used in the layers of the belt structure, and particularly those used in the load-bearing belt layers, comprise a plurality of filaments.

The filaments of the metal cords used in the belt structure (and typically also in other reinforcing layers of the tire) are preferably filaments of NT (normal tensile), HT (high tensile), SHT (super high tensile) or UHT (ultra high tensile) steel. Typically, these steel filaments have a carbon content of less than about 1%. Preferably, the carbon content is higher than or equal to about 0.7%. The filaments are typically coated with brass or other corrosion-resistant coating (for example Zn/Mn).

A tread band is applied circumferentially in a radially outer position with respect to said belt structure. Externally, the tread band has a running surface adapted to come into contact with the ground.

Circumferential grooves, which may be connected by transverse notches (not shown), define a tread pattern which comprises a plurality of ribs and/or blocks of various shapes and sizes distributed over the running surface.

A sidewall is applied externally on the carcass ply. The sidewall extends in an axially outer position, from the annular reinforcing structure to the tread band.

An under-layer is placed in the area where the lateral edges of the tread band are connected to the sidewall.

An elastomeric layer, generally known as a "liner", which provides the necessary impermeability of the tire to the inflation air, may be provided in a radially inner position with respect to the carcass ply.

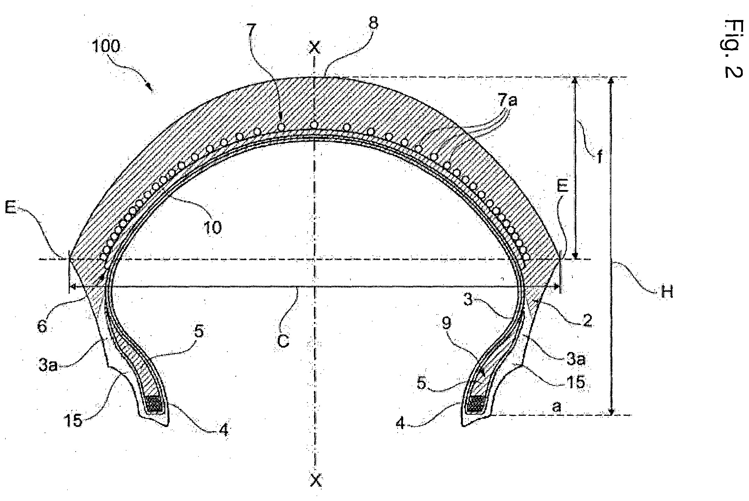

In Figure 2, the number 100 indicates the whole of a tire for wheels of motor vehicles.

An equatorial plane X-X and an axis of rotation Z (not shown in the figure) are defined in the tire 100. A circumferential direction (indicated in the figures by the arrow f pointing in the direction of rotation of the tire) and an axial direction perpendicular to the equatorial plane X-X are also defined.

The tire 100 comprises a carcass structure 2 including at least one carcass ply 3, made of elastomeric material and comprises a plurality of reinforcing members placed parallel to each other.

The carcass ply 3 is engaged, by its opposed circumferential edges, with at least one annular reinforcing structure 9.

In particular, the opposed lateral edges 3a of the carcass ply 3 are turned up around annular anchoring structures 4, called bead wires.

A tapered elastomeric filler 5 is applied on the axially outer perimetric edge of the bead wires 4, which occupies the space defined between the carcass ply 3 and the corresponding turned-up lateral edge 3a of the carcass ply 3.

The area of the tire including the bead wire 4 and the filler 5 forms an annular reinforcing structure 9, known as a bead, intended to anchor the tire on a corresponding mounting rim, not shown. The annular reinforcing structure 9, and in particular the filler 5, is made from elastomeric material comprising inorganic fibres of magnesium and/or aluminium silicates of nanometric dimensions.

The anti-abrasion strip 15 is placed in an outer position of each annular reinforcing structure 9.

Preferably, each anti-abrasion strip 15 is placed at least in an axially outer position relative to the annular reinforcing structure 9, extending at least between the sidewall and the radially inner portion of the annular reinforcing structure 9.

The reinforcing members included in the carcass ply 3 preferably comprise textile cords, chosen from among those commonly used in the building of carcasses for tires, for example made of nylon, rayon, PET, PEN, with a strand diameter of from 0.35 to 1.5 mm.

In an embodiment which is not shown, the carcass structure has its opposing lateral edges associated, without a turn-up, with specific annular reinforcing structures provided with two annular inserts. A filler of elastomeric material may be placed in a position axially outside the first annular insert. On the other hand, the second annular insert is placed in a position axially outside the end of the carcass ply. Finally, a further filler, which completes the construction of the annular reinforcing structure, may be provided in a position axially outside said second annular insert, and not necessarily in contact with the latter.

Typically, a belt structure 6 is applied circumferentially in a radially outer position on the carcass structure 2, a tread band 8 being superimposed circumferentially on the belt structure, and longitudinal and/or transverse notches, positioned so as to define a desired tread pattern, being typically formed in the tread band by a moulding operation carried out simultaneously with the vulcanization of the tire.

The tire 100 may comprise a pair of sidewalls applied laterally on opposite sides to said carcass structure 2.

Preferably, the tire 100 has a cross section having a distinctively large transverse curvature.

In particular, the tire 100 has a cross-sectional height H, measured on the equatorial plane between the top of the tread band and the fitting diameter, the latter being identified by the reference line a, passing through the beads of the tire.

The tire 100 also has a width C defined by the distance between the laterally opposed ends E of the tread itself, and a curvature defined by the particular value of the ratio between the distance f of the top of the tread from the line passing through the ends E of the tread itself, measured on the equatorial plane of the tire, and the aforesaid width C. The ends E of the tread may be formed with an angled edge.

In the present description and in the claims below, the expression "tires with a large curvature" indicates tires having a curvature ratio f/C of at least 0.2, and preferably f/C ≥ 0.25, for example 0.28. Preferably, such curvature ratio f/C is not greater than 0.8, preferably f/C ≤ 0.5.

Preferably, the tires have particularly low sidewalls. That is to say, the expression "tires with low or reduced sidewalls" indicates tires in which the ratio between height sidewalls (H-f)/H is less than 0.7, more preferably less than 0.65, for example 0.6.

In a preferred embodiment, the tire for motorcycles is intended to be mounted on the rear wheel having chord dimensions substantially in the range from 100 to 260 mm.

In a preferred embodiment, the tire is intended to be mounted on the front wheel of a motorcycle having chord dimensions substantially in the range from 80 to 140 mm.

Preferably, the distance (f) between the radially outer point of the tread and the line passing through the laterally opposed ends of the tread of the front tire may be substantially of from 45 to 65 mm. Preferably, the ratio between the transverse curvature and the chord (f/C) may be substantially of from 0.35 to 0.70, or even more preferably of from 0.35 to 0.60. Preferably, the (total height)/chord ratio (H/C) is substantially of from 0.6 to 0.9.

In the case of tubeless tires, the carcass structure 2 is typically covered on its inner walls with a sealing layer, known as a "liner", which is essentially composed of a layer of airtight elastomeric material, adapted to hermetically seal the tire when the latter has been inflated.

Preferably, the belt structure 6 is composed of a layer 7 having a plurality of circumferential turns 7a placed axially adjacent to each other, formed by a rubberized cord or a strip comprising several rubberized cords (preferably from two to five in number) wound spirally at an angle substantially equal to zero (typically between 0° and 5°) with respect to the equatorial plane X-X of the tire.

Preferably, the belt structure extends substantially over the whole crown portion of the tire.

In a preferred embodiment, the belt structure 6 may be composed of at least two radially superimposed layers, each composed of elastomeric material reinforced with cords placed parallel to each other. The layers are positioned in such a way that the cords of the first belt layer are orientated obliquely with respect to the equatorial plane of the tire, while the cords of the second layer also have an oblique orientation, but symmetrically crossing over the cords of the first layer (known as a "cross cord belt").

In both cases, the cords of the belt structure are generally textile or metal cords.

Preferably, the tire 100 may comprise a layer of elastomeric material 10 placed between said carcass structure 2 and said belt structure 6.

The tires 100 as described above can be built by assembling corresponding semi-finished products on a building drum (not shown), by means of at least one assembly device.

At least some of the components intended to form the carcass structure of the tire can be constructed and/or assembled on the building drum. More particularly, the building drum is capable of initially receiving the optional liner, followed by the carcass structure and the anti-abrasion strip. Devices which are not shown then engage one of the annular anchoring structures coaxially around each of the terminal hedges, position an outer sleeve comprising the belt structure and the tread band in a coaxially centred position around the cylindrical carcass sleeve, and shape the carcass sleeve in a toroidal configuration by a radial expansion of the carcass structure, so as to cause it to be applied against a radially inner surface of the sleeve.

When the green tire has been built, a moulding and vulcanization treatment is carried out to provide structural stabilization of the tire by crosslinking the elastomeric mixtures, while impressing a desired tread pattern on the tread band and impressing any required distinctive graphic signs on the sidewalls.

The present invention is further illustrated below by means of a number of examples of preparation, which are provided for guidance only and do not limit this invention in any way.

### EXAMPLE 1

The elastomeric materials shown in Table 1 were prepared in the following manner (the amounts of the various components are shown in phr).

All the components, with the exception of the sulphur, the accelerant (TBBS), and the retardant (PVI), were mixed in an internal mixer (a Pomini PL 1,6 model) for about 5 minutes (1^{st} step). The elastomeric composition was discharged as soon as the temperature reached 145 ± 5°C. The sulphur, the accelerant (TBBS) and the retardant (PVI) were added, and the mixing was carried out in an open roller mixer (2^{nd} step).

**TABLE 1**

| SPECIMEN | 1(R) | 2(C) | 3(C) | 4(I) |
|---|---|---|---|---|
| 1^{st} STEP | | | | |
| IR | 100.00 | 100.00 | 100.00 | 100.00 |
| CB | 75.00 | 75.00 | 85.00 | 75.00 |
| Pangel B5 | - | - | - | 13.00 |
| Stearic acid | 2.00 | 2.00 | 2.00 | 2.00 |
| Zinc oxide | 8.00 | 8.00 | 8.00 | 8.00 |
| Tackifying resin | 2.00 | 2.00 | 2.00 | 2.00 |
| Oil | 3.00 | 3.00 | 3.00 | 3.00 |
| Setting resin | 15.00 | 15.00 | 15.00 | 15.00 |
| Supported silane | 4.00 | 4.00 | 4.00 | 4.00 |
| HMMM 65% | 8.00 | 8.00 | 8.00 | 8.00 |
| 2^{nd} STEP | | | | |
| TBBS | 1.50 | 1.50 | 1.50 | 1.50 |
| PVI | 0.30 | 0.30 | 0.30 | 0.30 |
| Vulcanizing agent | 5.30 | 6.70 | 5.30 | 5.30 |

| | | | | |
|---|---|---|---|---|
| (R): reference mixture (C): comparison mixture (I): mixture for use in the invention IR High cis-1,4-polyisoprene synthetic rubber, SKI-3, Lee Rubber CB Carbon black, N375, Cabot Stearic acid Sogis Zinc oxide Zincol Ossidi Pangel B5: Sepiolite modified with quaternary ammonium salt at about 20% by weight (13 phr of Pangel B5 correspond to about 10 phr of mineral filler), Tolsa Group fibres with a length of from 0.2 µm to 2 µm and a diameter of from 5 nm to 30 nm; Tackifying resin Octyl phenolic resin, SP1068, Si Group Oil MES (Mild Extraction Solvate), ENI SPA Setting resin Solid phenolic resin of the novolac type, Durez 12686, Sumitomo Bakelite Supported silane 50% bis[3-(triethoxysilyl)propyl]tetrasulphide on 50% carbon black, Evonik-Degussa HMMM 65% hexamethoxymethylmelamine (65%) on an inert support, Cyrez 964 P.C., Cytec TBBS: N-tert-butyl-2-benzothiazyl-sulphenamide, Vulkacit® NZ/EGC, Lanxess; PVI cyclohexylthiophthalimide, Santogard PVI, Flexsys Vulcanizing agent: Sulphur, Redball Superfine, International Sulphur Inc. | | | | |

The Mooney ML (1+4) viscosity at 100°C was measured according to the ISO 289-1:2005 standard, on the non-crosslinked materials, produced as described above. The results are shown in Table 2.

The static mechanical properties (CA05 load at 50% elongation and CA1 load at 100% elongation) according to the UNI 6065 standard were measured at different elongations (50%, 100%) on specimens of the aforementioned elastomeric materials, vulcanized at 170°C for 10 minutes. The results are shown in Table 2.

The MDR rheometric analysis was performed with a Monsanto MDR rheometer. The test was conducted at 170°C for 10 minutes at an oscillation frequency of 1.66 Hz (100 oscillations per minute) and an oscillation amplitude of ± 0.5°. The values of minimum torque (ML) and maximum torque (MH) were measured.

The dynamic mechanical properties E' and tan delta were measured using an Instron 1341 dynamic device in the tension-compression mode according to the following methods. A test piece of material that had been crosslinked (at 170°C for 10 minutes), of cylindrical shape (length = 25 mm; diameter = 14 mm), pre-loaded in compression to a longitudinal deformation of 25% with respect to the initial length and kept at the predetermined temperature (23°C, 70°C or 100°C) throughout the test was subjected to a dynamic sinusoidal stress with an amplitude of ± 3.5% with respect to the length under pre-loading, with a frequency of 10 Hz. The dynamic mechanical properties were expressed in terms of values of the elastic dynamic modulus (E') and tan delta (loss factor). The value of tan delta was calculated as the ratio between the viscous dynamic modulus (E") and the elastic dynamic modulus (E'). The thermoplastic behaviour was evaluated as the difference ΔE' between the values of the elastic dynamic modulus measured at two reference temperatures chosen according to the type of elastomeric composition and its application in the tire.

The dynamic mechanical properties G' and tan delta were also measured, using an RPA Alpha Technologies device in shear mode.

A disc-shaped specimen (volume = 5 cm³) of elastomeric composition that had been crosslinked (at 170°C for 10 minutes) was subjected to the measurement of the elastic dynamic shear modulus (G') at 70°C, at a frequency of 10 Hz, with deformation from 0.4% to 10%. The dynamic mechanical properties were expressed in terms of values of the elastic dynamic shear modulus (G') and tan delta (loss factor). The value of tan delta was calculated as the ratio between the viscous dynamic shear modulus (G") and the elastic dynamic shear modulus (G').

The Payne effect was evaluated from the difference between the modules (G') measured at percentage deformations of 0.5% and 10%.

**TABLE 2**

| SPECIMEN | 1(R) | 2(C) | 3(C) | 4(I) |
|---|---|---|---|---|
| ML viscosity (1+4) | 79.5 | 78.1 | 95.0 | 80.3 |
| ML (dN m) | 3.10 | 2.86 | 3.63 | 2.81 |
| MH (dN m) | 68.13 | 76.91 | 86.88 | 87.73 |

| STATIC MECHANICAL PROPERTIES | | | | |
|---|---|---|---|---|
| Load at 50% elongation (MPa) | 8.1 | 8.8 | 9.3 | 9.6 |
| Load at 100% elongation (MPa) | 11.9 | 12.6 | 12.9 | 12.0 |
| Load at break (MPa) | 14.9 | 14.2 | 13.7 | 12.7 |
| Elongation at break (%) | 143 | 116 | 108 | 130 |
| Energy (J/cm³) | 14 | 12 | 11 | 13 |
| | | | | |

| DYNAMIC MECHANICAL PROPERTIES | | | | |
|---|---|---|---|---|
| E' (23°C - 10 Hz) (MPa) | 54 | 61 | 71 | 76 |
| E' (70°C - 10 Hz) (MPa) | 43 | 49 | 58 | 63 |
| E' (100°C - 10 Hz) (MPa) | 36 | 41 | 50 | 54 |
| Tan delta (23°C) | 0.196 | 0.190 | 0.212 | 0.223 |
| Tan delta (70°C) | 0.181 | 0.172 | 0.192 | 0.200 |
| G' 9% (MPa) | 6.96 | 7.47 | 10.03 | 10.30 |
| Tan delta (9%) | 0.299 | 0.287 | 0.331 | 0.339 |
| G' 3% (MPa) | 9.65 | 9.86 | 12.64 | 13.43 |
| Tan delta (3%) | 0.319 | 0.298 | 0.414 | 0.425 |
| Payne ΔG' (0.5%-10%) | 14.2 | 13.5 | 15.9 | 17.1 |

| | | | | |
|---|---|---|---|---|
| (R): reference mixture (C): comparison mixture (I): mixture for use in the invention | | | | |

The data for reference 1 and comparison 2 reported in Table 2 showed that, although the increased sulphur content led to an increase in the static and dynamic reinforcement values, it had a negative side effect in the form of worsening of the breaking properties, and consequently higher brittleness.

The data for reference 1 and comparison 3 reported in Table 2 showed that, although the increased carbon black content led to an increase in the static and dynamic reinforcement values, it had a negative side effect in the form of worsening of the breaking properties, together with a considerable increase in viscosity, leading to difficulties in working.

The data for comparison 3 and the specimen 4 reported in Table 2 showed that, although the partial replacement of the carbon black content with sepiolite, with the same vulcanization system, led to an improvement of all the static mechanical properties (in terms of modulus and breaking), it had a negative side effect in the form of a significant increase in hysteresis and the Payne effect.

### EXAMPLE 2

Vehicle tires were prepared, comprising a bead filler made from the elastomeric material according to specimen 1 (reference) and specimen 4 (invention).

The tires, with dimensions of 235/70 R16, were mounted on the rear wheels of a Mitsubishi LM 200 2.5 TDI and tested on a racetrack. The results are shown in Table 3.

In order to evaluate the behaviour of the tire, the inspector simulated some characteristic manoeuvres (for example, lane changing, entering a bend, and leaving a bend). The inspector then evaluated the behaviour of the tire and awarded marks based on the performance of the tire during said manoeuvres.

The tests were conducted in extreme driving conditions which describe the behaviour of the tire at the limit of adhesion. The inspector then performed manoeuvres which an average driver might be forced to perform in the case of unforeseen and hazard situations, such as sharp turns at high speed, sudden lane changing to avoid obstacles, emergency braking, and the like.

The inspector evaluated various behaviours, such as the force on the steering wheel when it was violently rotated; the ease of entry, in other words the behaviour of the tire on entering a bend at the limit speed; the balance, in other words the degree of oversteer or understeer of the vehicle; the efficiency, in other words the capacity of the tire to absorb a large and rapid load transfer resulting from a sudden lane change without excessive deformation and without compromising the stability and controllability of the vehicle; release on a bend, in other words the capacity of the tire to attenuate the effects of instability caused by a sudden release of the accelerator in a bend taken at the limit speed; controllability, in other words the capacity of the tire to keep the vehicle on its path and/or return it thereto after a loss of adhesion.

Table 3 summarizes the marks awarded by the inspector for the controllability of the tires. The results of these tests are expressed in the form of an evaluation scale representing the subjective opinion given by the inspector using a marking system. The values shown in the table below represent an average of those found in several test sessions (5 - 6 tests, for example). It should be noted that the scale of values runs from a minimum of 4 to a maximum of 8.

**TABLE 3**

| SPECIMEN TIRE | | | 1(R) | 4(I) |
|---|---|---|---|---|
| Straight | Centring on the straight | | 7 | 7.5 |
| | Neutral point at centre | | 6 | 6+ |
| | Steering stiffness at zero | | 6.5 | 6.5 |
| | Linearity of steering torque | | 6.5 | 6.5 |
| | | | | |
| Driving in normal conditions | Response | Delay | 6.5 | 7 |
| | | Gain | 6.5 | 6.5 |
| | | Progressiveness | 6.5 | 6.5 |
| | Centring on bends | | 7 | 7 |
| | Steering wheel load | | 6.5 | 6.5 |
| | Precision away from zero point | | 6.5 | 7 |
| | | | | |
| | Ease of entry | | 6.5 | 7 |
| | Balance | Understeer | 6.5 | 7 |
| | | Oversteer | 7 | 7 |
| | Release on bends | | 7 | 7 |
| | Lane change | | 7 | 7 |
| Racing driving | Loss of adhesion | | 7 | 7 |
| | Realignment | | 7 | 7 |
| | Controllability | | 7 | 7 |
| | Softness | | 7 | 7 |
| | Roll stiffness | | 6.5 | 7 |
| | Power transmission | | 6.5 | 6.5 |
| | Lateral road holding | | 6.5 | 6.5 |

| | | | | |
|---|---|---|---|---|
| (R): comparison tire (I): tire according to the invention | | | | |

The results given in Table 3 show that although the tire according to the present invention, Specimen 4, was made from an elastomeric material having a high Payne effect value, its behaviour was better than that of the reference tire, Specimen 1, which was already considered to be excellent, particularly as regards manoeuvres performed at high speed, such as the ease of entry into bends, with less tendency to understeer, and greater stability on the straight with less roll.

## Claims

1. Tire (100) for vehicle wheels comprising:
- a carcass structure comprising at least one carcass layer (101) having opposed side edges associated with relative annular reinforcing structures (103);
- a tread band (109) applied in a radially outer position with respect to said carcass structure; and
- a pair of sidewalls (108) laterally applied onto opposite sides with respect to said carcass structure;
**characterized in that** said annular reinforcing structures (103) comprise a crosslinked elastomeric material obtained by crosslinking of a crosslinkable elastomeric composition comprising magnesium and/or aluminium silicate inorganic fibres having nanometric dimensions, and **in that** said crosslinked elastomeric material has an elastic dynamic modulus E' value, at 70°C and frequency of 10 Hz, higher than 55 Mpa.

2. Tire (100) for vehicle wheels according to claim 1, wherein said crosslinkable elastomeric composition comprises (a) a diene elastomeric polymer.

3. Tire (100) for vehicle wheels according to claim 1, wherein said crosslinkable elastomeric composition comprises (b) magnesium and/or aluminium silicate inorganic fibres having a diameter of less than 500 nm.

4. Tire (100) for vehicle wheels according to claim 1, wherein said crosslinkable elastomeric composition comprises (b) magnesium and/or aluminium silicate inorganic fibres having a diameter of less than 100 nm.

5. Tire (100) for vehicle wheels according to claim 1, wherein said crosslinkable elastomeric composition comprises (b) magnesium and/or aluminium silicate inorganic fibres having a length less than or equal to 10 µm.

6. Tire (100) for vehicle wheels according to any one of the preceding claims, wherein said inorganic fibres are selected from the group consisting of sepiolite fibres, palygorskite fibres, or mixtures thereof.

7. Tire (100) for vehicle wheels according to claim 6, wherein said inorganic fibres are sepiolite fibres.

8. Tire (100) for vehicle wheels according to any one of the preceding claims, wherein said inorganic fibres are present in said crosslinkable elastomeric composition in an amount of from 5 phr to 25 phr.

9. Tire (100) for vehicle wheels according to claim 8, wherein said inorganic fibres are present in said crosslinkable elastomeric composition in an amount of from 10 phr to 20 phr.

10. Tire (100) for vehicle wheels according to any one of the preceding claims, wherein said crosslinkable elastomeric composition comprises at least one carbon black reinforcing filler in an amount of from 30 to 100 phr.

11. Tire (100) for vehicle wheels according to claim 10, wherein said crosslinkable elastomeric composition comprises at least one carbon black reinforcing filler in an amount of from 40 to 90 phr.

12. Tire (100) for vehicle wheels according to any one of the preceding claims, wherein said crosslinkable elastomeric composition comprises at least one methylene donor compound in an amount of from 1 to 15 phr.

13. Tire (100) for vehicle wheels according to claim 12, wherein said crosslinkable elastomeric composition comprises at least one methylene acceptor compound in an amount of from 5 to 25 phr.

14. Tire (100) for vehicle wheels according to claim 13, wherein said crosslinkable elastomeric composition comprises at least one methylene donor compound in an amount of from about 4 to about 8 phr, and at least one methylene acceptor compound in an amount of from 10 to 20 phr.

15. Tire (100) for vehicle wheels according to any one of the preceding claims, wherein said crosslinkable elastomeric composition comprises a vulcanizing agent in an amount ranging from 3.5 phr to 7.5 phr.

16. Tire (100) for vehicle wheels according to claim 15, wherein said crosslinkable elastomeric composition comprises a vulcanizing agent in an amount ranging from 4.5 phr to 6.5 phr.

17. Tire (100) for vehicle wheels according to any one of the preceding claims, wherein said crosslinked elastomeric material layer has an elastic dynamic modulus E' value, at 70°C and frequency of 10 Hz, higher than 60 MPa.

18. Tire (100) for vehicle wheels according to any one of the preceding claims, wherein said crosslinked elastomeric material layer has an elastic dynamic modulus E' value, at 23°C and frequency of 10 Hz, higher than 65 MPa.

19. Tire (100) for vehicle wheels according to any one of the preceding claims, wherein said crosslinked elastomeric material layer has an elastic dynamic modulus E' value, at 23°C and frequency of 10 Hz, higher than 70 MPa.

## Patentansprüche

1. Reifen (100) für Fahrzeugräder umfassend:
- eine Karkassenstruktur umfassend zumindest eine Karkassenlage (101) mit gegenüberliegenden Seitenrändern, die jeweiligen ringförmigen Verstärkungsstrukturen (103) zugeordnet sind;
- einen Laufflächenring (109), der in Bezug auf die Karkassenstruktur in einer radial äußeren Position angelegt ist; und
- ein Paar Seitenwände (108), die seitlich an gegenüberliegenden Seiten in Bezug auf die Karkassenstruktur angebracht sind;
**dadurch gekennzeichnet, dass** die ringförmigen Verstärkungsstrukturen (103) ein vernetztes Elastomermaterial umfassen, das durch Vernetzen einer vernetzbaren Elastomerzusammensetzung erhalten wird, die anorganische Magnesium- und/oder Aluminiumsilikatfasern mit Nanoabmessungen umfasst, und dass das vernetzte Elastomermaterial einen Wert für den dynamischen Elastizitätsmodul E' bei 70 °C und einer Frequenz von 10 Hz von mehr als 55 Mpa aufweist.

2. Reifen (100) für Fahrzeugräder nach Anspruch 1, wobei die vernetzbare elastomere Zusammensetzung (a) ein Dien-Elastomerpolymer umfasst.

3. Reifen (100) für Fahrzeugräder nach Anspruch 1, wobei die vernetzbare Elastomerzusammensetzung (b) anorganische Magnesium- und/oder Aluminiumsilikatfasern mit einem Durchmesser von weniger als 500 nm umfasst.

4. Reifen (100) für Fahrzeugräder nach Anspruch 1, wobei die vernetzbare Elastomerzusammensetzung (b) anorganische Magnesium- und/oder Aluminiumsilikatfasern mit einem Durchmesser von weniger als 100 nm umfasst.

5. Reifen (100) für Fahrzeugräder nach Anspruch 1, wobei die vernetzbare Elastomerzusammensetzung (b) anorganische Magnesium- und/oder Aluminiumsilikatfasern mit einer Länge von weniger als oder gleich 10 µm umfasst.

6. Reifen (100) für Fahrzeugräder nach einem der vorhergehenden Ansprüche, wobei die anorganischen Fasern ausgewählt sind aus der Gruppe bestehend aus Sepiolithfasern, Palygorskitfasern, oder Mischungen davon.

7. Reifen (100) für Fahrzeugräder nach Anspruch 6, wobei die anorganischen Fasern Sepiolithfasern sind.

8. Reifen (100) für Fahrzeugräder nach einem der vorhergehenden Ansprüche, wobei die anorganischen Fasern in der vernetzbaren Elastomerzusammensetzung in einer Menge von 5 phr bis 25 phr vorliegen.

9. Reifen (100) für Fahrzeugräder nach Anspruch 8, wobei die anorganischen Fasern in der vernetzbaren Elastomerzusammensetzung in einer Menge von 10 phr bis 20 phr vorliegen.

10. Reifen (100) für Fahrzeugräder nach einem der vorhergehenden Ansprüche, wobei die vernetzbare Elastomerzusammensetzung zumindest einen verstärkenden Rußfüllstoff in einer Menge von 30 phr bis 100 phr umfasst.

11. Reifen (100) für Fahrzeugräder nach Anspruch 10, wobei die vernetzbare Elastomerzusammensetzung zumindest einen verstärkenden Rußfüllstoff in einer Menge von 40 phr bis 90 phr umfasst.

12. Reifen (100) für Fahrzeugräder nach einem der vorhergehenden Ansprüche, wobei die vernetzbare Elastomerzusammensetzung zumindest eine Methylen-Donorverbindung in einer Menge von 1 phr bis 15 phr umfasst.

13. Reifen (100) für Fahrzeugräder nach Anspruch 12, wobei die vernetzbare Elastomerzusammensetzung zumindest eine Methylen-Akzeptorverbindung in einer Menge von 5 phr bis 25 phr umfasst.

14. Reifen (100) für Fahrzeugräder nach Anspruch 13, wobei die vernetzbare Elastomerzusammensetzung zumindest eine Methylen-Donorverbindung in einer Menge von 4 phr bis 8 phr und zumindest eine Methylen-Akzeptorverbindung in einer Menge von 10 phr bis 20 phr umfasst.

15. Reifen (100) für Fahrzeugräder nach einem der vorhergehenden Ansprüche, wobei die vernetzbare Elastomerzusammensetzung ein Vulkanisationsmittel in einer Menge von 3,5 phr bis 7,5 phr umfasst.

16. Reifen (100) für Fahrzeugräder nach einem der vorhergehenden Ansprüche, wobei die vernetzbare Elastomerzusammensetzung ein Vulkanisationsmittel in einer Menge von 4,5 phr bis 6,5 phr umfasst.

17. Reifen (100) für Fahrzeugräder nach einem der vorhergehenden Ansprüche, wobei die Schicht aus vernetztem Elastomermaterial einen Wert für den dynamischen Elastizitätsmodul E' bei 70 °C und einer Frequenz von 10 Hz von mehr als 60 MPa aufweist.

18. Reifen (100) für Fahrzeugräder nach einem der vorhergehenden Ansprüche, wobei die Schicht aus vernetztem Elastomermaterial einen Wert für den dynamischen Elastizitätsmodul E' bei 23 °C und einer Frequenz von 10 Hz von mehr als 65 MPa aufweist.

19. Reifen (100) für Fahrzeugräder nach einem der vorhergehenden Ansprüche, wobei die Schicht aus vernetztem Elastomermaterial einen Wert für den dynamischen Elastizitätsmodul E' bei 23 °C und einer Frequenz von 10 Hz von mehr als 70 MPa aufweist.

## Revendications

1. Pneu (100) pour roues de véhicule comprenant :
- une structure de carcasse comprenant au moins une couche de carcasse (101) ayant des bords latéraux opposés associés à des structures de renforcement annulaires relatives (103) ;
- une bande de roulement (109) appliquée dans une position radialement externe par rapport à ladite structure de carcasse ; et
- une paire de flancs (108) appliqués latéralement sur des côtés opposés par rapport à ladite structure de carcasse ;
**caractérisé en ce que** lesdites structures de renforcement annulaires (103) comprennent un matériau élastomère réticulé obtenu par réticulation d'une composition élastomère réticulable comprenant des fibres inorganiques de silicate de magnésium et/ou d'aluminium ayant des dimensions nanométriques, et **en ce que** ledit matériau élastomère réticulé a une valeur de module dynamique élastique E', à 70°C et à une fréquence de 10 Hz, supérieure à 55 Mpa.

2. Pneu (100) pour roues de véhicule selon la revendication 1, dans lequel ladite composition élastomère réticulable comprend (a) un polymère élastomère diène.

3. Pneu (100) pour roues de véhicule selon la revendication 1, dans lequel ladite composition élastomère réticulable comprend (b) des fibres inorganiques de silicate de magnésium et/ou d'aluminium ayant un diamètre inférieur à 500 nm.

4. Pneu (100) pour roues de véhicule selon la revendication 1, dans lequel ladite composition élastomère réticulable comprend (b) des fibres inorganiques de silicate de magnésium et/ou d'aluminium ayant un diamètre inférieur à 100 nm.

5. Pneu (100) pour roues de véhicule selon la revendication 1, dans lequel ladite composition élastomère réticulable comprend (b) des fibres inorganiques de silicate de magnésium et/ou d'aluminium ayant une longueur inférieure ou égale à 10 µm.

6. Pneu (100) pour roues de véhicule selon l'une quelconque des revendications précédentes, dans lequel lesdites fibres inorganiques sont choisies dans le groupe constitué de fibres de sépiolite, de fibres de palygorskite ou de mélanges de celles-ci.

7. Pneu (100) pour roues de véhicule selon la revendication 6, dans lequel lesdites fibres inorganiques sont des fibres de sépiolite.

8. Pneu (100) pour roues de véhicule selon l'une quelconque des revendications précédentes, dans lequel lesdites fibres inorganiques sont présentes dans ladite composition élastomère réticulable en une quantité allant de 5 phr à 25 phr.

9. Pneu (100) pour roues de véhicule selon la revendication 8, dans lequel lesdites fibres inorganiques sont présentes dans ladite composition élastomère réticulable en une quantité allant de 10 phr à 20 phr.

10. Pneu (100) pour roues de véhicule selon l'une quelconque des revendications précédentes, dans lequel ladite composition élastomère réticulable comprend au moins une charge renforçante de noir de carbone en une quantité allant de 30 à 100 phr.

11. Pneu (100) pour roues de véhicule selon la revendication 10, dans lequel ladite composition élastomère réticulable comprend au moins une charge renforçante de noir de carbone en une quantité allant de 40 à 90 phr.

12. Pneu (100) pour roues de véhicule selon l'une quelconque des revendications précédentes, dans lequel ladite composition élastomère réticulable comprend au moins un composé donneur de méthylène en une quantité allant de 1 à 15 phr.

13. Pneu (100) pour roues de véhicule selon la revendication 12, dans lequel ladite composition élastomère réticulable comprend au moins un composé accepteur de méthylène en une quantité allant de 5 à 25 phr.

14. Pneu (100) pour roues de véhicule selon la revendication 13, dans lequel ladite composition élastomère réticulable comprend au moins un composé donneur de méthylène en une quantité allant d'environ 4 à environ 8 phr, et au moins un composé accepteur de méthylène en une quantité allant de 10 à 20 phr.

15. Pneu (100) pour roues de véhicule selon l'une quelconque des revendications précédentes, dans lequel ladite composition élastomère réticulable comprend un agent de vulcanisation en une quantité se trouvant dans la plage allant de 3,5 phr à 7,5 phr.

16. Pneu (100) pour roues de véhicule selon la revendication 15, dans lequel ladite composition élastomère réticulable comprend un agent de vulcanisation en une quantité se trouvant dans la plage allant de 4,5 phr à 6,5 phr.

17. Pneu (100) pour roues de véhicule selon l'une quelconque des revendications précédentes, dans lequel ladite couche de matériau élastomère réticulé a une valeur de module dynamique élastique E', à 70°C et à une fréquence de 10 Hz, supérieure à 60 MPa.

18. Pneu (100) pour roues de véhicule selon l'une quelconque des revendications précédentes, dans lequel ladite couche de matériau élastomère réticulé a une valeur de module dynamique élastique E', à 23°C et à une fréquence de 10 Hz, supérieure à 65 MPa.

19. Pneu (100) pour roues de véhicule selon l'une quelconque des revendications précédentes, dans lequel ladite couche de matériau élastomère réticulé a une valeur de module dynamique élastique E', à 23°C et à une fréquence de 10 Hz, supérieure à 70 MPa.
